# NOUVEAU FASCICULE DE BREVET EUROPEEN

(11) **EP 2 981 176 B2**
(45) Date de publication et mention de la décision concernant l'opposition: **16.07.2025**
(45) Mention de la délivrance du brevet: 26.09.2018
(21) Numéro de dépôt: 14715294.6
(22) Date de dépôt: 04.04.2014
(51) Int. Cl.: A23G 4/08, A23G 4/10, A23G 4/20

(54) **NOUVELLE CONFISERIE À LA CROUSTILLANCE AMÉLIORÉE**
NEUARTIGE SÜSSWARE MIT VERBESSERTER KNUSPRIGKEIT
NOVEL CONFECTIONARY WITH IMPROVED CRISPINESS

(30) Priorité: 04.04.2013 FR 1353050
(43) Date de publication de la demande: 10.02.2016
(73) Titulaire: Roquette Frères, 62136 Lestrem (FR)
(72) Inventeur: BARRE, Antoine, F-59350 Saint Andre Lez Lille (FR); ORTIZ DE ZARATE, Dominique, F-59400 Merville (FR); DEMEULEMEESTER, Patrice, F-59126 Linselles (FR)
(74) Mandataire: Plasseraud IP
(86) Numéro de dépôt international: PCT/EP2014/056772
(87) Numéro de publication internationale: WO 2014/161977

(56) Documents cités:
- WO-A1-2008/096945
- WO-A1-98/37769
- WO-A2-2011/137329

## Description

### DOMAINE DE L'INVENTION

La présente invention concerne un procédé de fabrication d'un chewing-gum acariogène possédant une croustillance améliorée par rapport aux produits de l'art antérieur. Le procédé caractérisé en ce qu'il permet de réduire considérablement la durée de fabrication desdits produits.

### ARRIERE-PLAN TECHNOLOGIQUE

Les hommes connaissent depuis bien longtemps le mâchage, bien avant l'apparition du chewing-gum. En effet, les hommes préhistoriques mâchaient déjà de la sève de conifère, des feuilles, des sécrétions de plantes, des racines. Au Mexique, les Mayas, il y a plus de 3000 ans, mâchaient de la sève de sapotier, sorte de latex appelé « chiclé ». En 400 avant J.C, les Grecs mâchaient de la résine, les Indiens d'Amazonie des boulettes de tabac, ou de la chique de coca extrait des petits arbustes péruviens : le kolatier.

Pourtant, il fallut attendre le XIXème siècle pour qu'apparaisse le chewing-gum tel que nous le connaissons aujourd'hui.

En 1869, le brevet du chewing-gum est déposé par le dentiste William Finley Semple, convaincu de ses effets bénéfiques pour les dents, mais il ne commercialisera pas son invention. C'est le new-yorkais Thomas Adams qui en aura l'idée vers 1870 en mettant au point une machine à produire du chewing-gum. C'est lui, qui, en mélangeant du chiclé, de la résine et du sirop, fabrique et commercialise en 1872 les premiers chewing-gums.

Aujourd'hui, la France est devenue le 2ème pays consommateur mondial de chewing-gum derrière les Etats-Unis. Le chewing-gum peut être consommé à tout moment de la journée. Il est le produit idéal lorsqu'on a envie de consommer quelque chose d'agréable ou de manger une sucrerie. De plus, le chewing-gum, quel que soit son parfum, procure une haleine fraîche et joue un rôle hygiénique et social. 53% des personnes mâchent du chewing-gum pour rafraîchir l'haleine. Le chewing-gum apparaît de plus en plus comme un substitut au dentifrice. 39% des personnes mâchent du chewing-gum pour nettoyer leurs dents quand ils ne peuvent pas les brosser. Le chewing-gum est notamment consommé après le repas car il facilite la digestion en favorisant la sécrétion salivaire et le travail de l'estomac. Beaucoup de consommateurs utilisent le chewing-gum comme un anti-stress ou comme un moyen de réduire leur tension nerveuse et de se détendre. 30% des personnes aiment mâcher du chewing-gum quand ils sont énervés et 27% se calment en mâchant du chewing-gum. Le chewing-gum est également considéré comme un substitut efficace à la cigarette. A une époque où les mesures légales visant à réduire la consommation de tabac se développent fortement, le chewing-gum a encore de belles perspectives de développement.

Le chewing-gum (ou gomme à mâcher, pâte à mâcher, chiclette) est une gomme à laquelle sont ajoutés des arômes et parfums alimentaires, destinée à être mâchée. Tous les chewing-gums sont fabriqués à partir d'une gomme de base à laquelle on rajoute des arômes et du sucre et/ou des édulcorants pour donner le goût. Le chewing-gum est un mélange de deux phases : une phase liquide (sirop, sucres et/ou édulcorant dilués) et une phase solide composée de la gomme de base et de sucre et/ou édulcorant cristallisé.

Actuellement, le chiclé, gomme de base naturelle issue du tronc des Sapotiers mais devenue trop chère du fait de la rareté des arbres et des coûts de production et de transport trop élevés), a été substituée par un produit de synthèse (la gomme de base) qui se compose de :
- 1 ou 2 élastomères qui déterminent l'élasticité,
- des cires abaissant le point de ramollissement et possédant un pouvoir anti-collant et plastifiant,
- des charges minérales qui améliorent les qualités mécaniques,
- un antioxydant qui protège les qualités de la gomme lors de la fabrication et qui la protège du vieillissement,
- des résines qui assurent le liant des matières premières de la gomme.

Le dosage de ces 5 ingrédients détermine le type de gomme (chewing-gum ou bubble-gum). La recette reste souvent secrète car celle-ci n'est pas constante. Elle varie en fonction du prix de la matière première. Les ingrédients constitutifs de la gomme de base sont insolubles dans l'eau. Par contre, la majorité des ingrédients constitutifs des chewing-gums, à l'exception de la gomme de base, est soluble dans l'eau (c'est-à-dire la salive ici). Au bout de 3 à 4 minutes de temps de mastication, les composés sont extraits (solubilisés) par la salive, d'où la perte de goût du chewing-gum. Il reste en bouche la gomme de base et quelques arômes qui ne sont pas solubles dans l'eau.

La gomme de base est un produit complexe à fabriquer : les ingrédients sont dosés avec rigueur pour obtenir des gommes plus ou moins élastiques. Les ingrédients sont malaxés entre une heure et demie et deux heures dans un pétrin qui fonctionne comme celui des boulangers. Le malaxage fait chauffer la gomme. Elle atteint au final une température de 95°C à 98 C. L'élastomère utilisé (à la place du chiclé) est un copolymère isobutylène-isoprène (butyl) de qualité alimentaire.

On ajoute à cette base les arômes, les édulcorants ou le sucre ainsi que divers additifs et auxiliaires de fabrication (colorant, gélatine, émulsifiant, stabilisant, agent gélifiant, bicarbonate, cire de carnauba). Les ingrédients et la gomme de base sont mélangés dans un pétrin pendant 15 à 20 minutes. En fin de malaxage, la pâte atteint une température de 50 °C environ. La pâte de chewing-gum est déposée à l'intérieur d'une extrudeuse. Bien pressée, elle forme maintenant des bandes plus ou moins épaisses. Les bandes passent ensuite dans le laminoir et sont découpées en tablettes ou en noyaux appelés également centres. Après refroidissement, les tablettes ou les centres sont maintenus à une température et une humidité contrôlées pendant 6 à 48 heures. Cette phase est très contrôlée, car la qualité des gommes à mâcher en dépend.

Les tablettes sont enveloppées dans un emballage en aluminium pour conserver toute leur saveur. Elles sont ensuite mises en paquets. Les centres sont dragéifiés avant d'être emballées dans des contenants en carton ou en plastique.

La présente invention concerne uniquement des procédés de fabrication de dragées de chewing-gum, c'est-à-dire ceux obtenus après dragéification des noyaux.

La présente invention concerne également uniquement des procédés de fabrication de chewing-gum acariogènes, dragéifiés avec du maltitol.

Le chewing-gum sans sucres est aujourd'hui numéro 1 des ventes, avec 90% de parts de marché dans la plupart des pays européens. Grâce aux polyols, les chewing-gums sont acariogènes, moins caloriques et excellents en goût.

La tendance vers une alimentation plus saine continue à gagner du terrain et modifie les modes de consommation et les habitudes d'achat de façon significative. Consommer moins de sucres tout en continuant à se faire plaisir est le souhait de plus en plus de consommateurs en réponse aux multiples recommandations nutritionnelles. L'utilisation de succédanés du sucre en remplacement du sucre se justifie pour la fabrication de denrées alimentaires à valeur énergétique réduite, de denrées non cariogènes et d'aliments sans sucre ajutés, ainsi que pour la production de produits diététiques.

Du point de vue des industriels de la confiserie, une volonté très nette se dégage également. Celle de fabriquer des confiseries acariogènes, c'est-à-dire qu'elles ne causent pas de carie dentaire car les produits qu'elles renferment ne produisent pas d'acides et ne sont pas métabolisés par la flore buccale bactérienne.

Les industriels cherchent à obtenir des confiseries répondant au cahier des charges très strict de l'Association Sympadent Suisse, de façon à pouvoir apposer sur leur confiserie le label connu et reconnu de tous. Ce label, un petit bonhomme en forme de dent et son parapluie, a été créé par l'Action Sympadent pour désigner les produits respectueux de la dentition et pour servir ainsi d'indicateur au service d'un comportement qui préserve la dentition. Ces produits ne doivent être ni cariogènes, ni érosifs. Différents types de sucres sont cariogènes et ceci veut dire qu'ils sont susceptibles de provoquer des caries. Le potentiel érosif dommageable par contre dépend de la teneur en acide d'un produit.

Les produits qui arborent le label Sympadent doivent tout d'abord passer un test scientifique dit « mesure du pH par télémétrie ». Ce test est effectué par des centres d'essais indépendants. Il s'agit d'une procédure normalisée dans laquelle on mesure sur des sujets expérimentaux le pH de la plaque dentaire en plaçant des électrodes recouverts de plaque dans les espaces interdentaires. La mesure se fait pendant la consommation de la confiserie à tester et trente minutes après sa consommation. La confiserie est considérée non cariogène si le pH ne tombe pas en dessous du seuil critique de 5,7. Le potentiel érosif est déterminé à l'aide d'une électrode sans plaque placée dans la salive. Les produits qui exposent les dents à moins de 40 µmol d'acide pendant leur consommation sont réputés non érosifs.

La dent qui sourit sous son parapluie est un symbole intelligible partout dans le monde. Il est compris sans autre explication. Les produits qui en sont porteurs ménagent les dents. Ce pictogramme ainsi que les indications normalisées des valeurs nutritives contribuent à une alimentation saine et respectueuse de la dentition. Un consommateur aura plutôt tendance à acheter des confiseries portant ce logo.

Quel que soit l'âge des consommateurs, la volonté d'avoir des produits de qualité est permanente. La qualité des chewing-gums se mesure par plusieurs paramètres, dont la texture du chewing-gum (plutôt dur ou au contraire plutôt mou, croustillance persistante des dragées lors de la mastication) et le goût (saveur sucrée, effet rafraîchissant ou non, persistance de l'arôme lors de la mastication). En effet, les consommateurs se plaignent très souvent de la disparition trop rapide à la fois de la croustillance et du goût lors de la mastication.

De nombreux travaux de recherche ont déjà été menés sur la persistance du goût par de nombreuses sociétés. La Demanderesse a également travaillé sur ce sujet et on peut à ce titre citer le brevet EP 0664960B dans lequel la Demanderesse a démontré qu'il était possible d'améliorer la qualité organoleptique d'un chewing-gum, et notamment améliorer le goût et l'aromatisation en termes d'impact et de durée, en lui faisant comporter, en tant que phase pulvérulente, du maltitol ayant une pureté en maltitol supérieure à 95% et une granulométrie telle que 50% des particules de maltitol au sein du chewing-gum soient de taille inférieure à 90 microns.

On connait également le document WO2008/096945 qui divulgue un chewing-gum composé d'une partie centrale enrobée dans une couche de gomme de base, elle-même recouverte d'un enrobage. Le chewing-gum comporte en outre des granules de xylitol de très grand diamètre.

Le document WO 2011/137329 divulgue une composition de chewing-gum comprenant un matériel particulaire croustillant constitué de particules de polyol de diamètres compris entre 0.5 et 4 mm et enrobées par un matériel croustillant.

Le document WO98/37769 concerne une composition de chewing-gum enrichie en particules d'isomalt cristallin de diamètre comprise entre 425µm et 600µm.

Désireuse d'améliorer encore l'état de la technique et surtout de répondre aux attentes toujours plus exigeantes des consommateurs, la Demanderesse s'est donc attachée à l'obtention d'un nouveau chewing-gum acariogène présentant une croustillance améliorée, c'est-à-dire persistant longtemps au cours de la mastication par rapport aux chewing-gums traditionnels de l'état de la technique.

### RESUME DE L'INVENTION

Après de nombreux travaux de recherche, la Demanderesse a constaté que l'on pouvait, de façon surprenante et inattendue, obtenir un chewing-gum possédant une persistance de la croustillance lors de la mastication.

La présente invention concerne un procédé de fabrication d'un chewing-gum dragéifié acariogène possédant une croustillance améliorée selon la revendication 1.

Selon un mode préférentiel, la composition de chewing-gum mise en œuvre dans le procédé de l'invention est caractérisée en ce qu'elle comporte entre 5 et 20%, de préférence entre 8 et 13% d'une poudre d'hydrate de carbone acariogène d'une granulométrie moyenne de 650µm à 750µm, l'hydrate de carbone étant le maltitol.

Selon un mode préférentiel, ladite composition mise en œuvre dans le procédé de l'invention est caractérisée en ce que la poudre de maltitol cristallise présentant une richesse en maltitol supérieure à 99,5 % en poids, de préférence supérieure ou égale à 99,7 % en poids, plus préférentiellement supérieure à 99,8 % en poids, présentant :
- une répartition granulométrique en volume, déterminée par granulométrie laser, présentant :
   * moins de 20 %, de préférence moins de 15%, plus préférentiellement moins de 10 % et plus préférentiellement encore moins de 5 % de particules de taille inférieure à 200 µm,
   * moins de 6 % de particules de taille inférieure à 100 µm,
   * moins de 2 % de particules de taille inférieure à 40 µm, et
- une valeur d'écoulement inférieure ou égale à 10 secondes, de préférence inférieure ou égale à 5 secondes,
- une densité aérée supérieure à 0,85 g/ml, de préférence comprise entre 0,88 et 1,00 g/ml, une densité tassée supérieure à 0,97 g/ml, de préférence comprise entre 0,98 et 1,05 g/ml et une compressibilité inférieure à 17%, de préférence inférieure à 10%, et plus préférentiellement encore inférieure à 5 %.

Un autre mode de réalisation de l'invention concerne une composition de chewing-gum acariogène mise en œuvre dans le procédé de l'invention possédant une croustillance amélioré, caractérisée en ce qu'elle comporte :
- de 15 à 40% de gomme de base,
- de 65 à 80% de polyols sous la forme pulvérulente et/ou liquide, dont au moins 5 à 20% est du maltitol sous la forme d'une poudre de maltitol d'une granulométrie moyenne de 650µm à 750µxn,
- de 0,2 à 3% d'un agent aromatisant,
et qu'elle est dragéifiée.

L'invention concerne un procédé de fabrication d'un chewing-gum dragéifié acariogène caractérisé
en ce qu'il comporte les étapes suivantes :
- fabrication d'une composition de chewing-gum en mélangeant au moins une gomme de base, un arôme et un hydrate de carbone acariogène sous la forme d'une poudre de granulométrie moyenne de 650µm à 750µm,
- extrusion du mélange précèdent,
- laminage,
- découpe,
- refroidissement, et
- dragéification des centres ainsi obtenus, l'hydrate de carbone étant le maltitol.

Selon la présente invention, le procédé est caractérisé en ce que l'étape de dragéification comprend un ou plusieurs cycles comprenant chacun une phase d'application, généralement par pulvérisation, d'un sirop de dragéification (contenant un ou plusieurs polyols, mais aussi parfois des liants comme la gomme arabique ou la gélatine, des colorants comme le TiO₂, des édulcorants intenses...) sur les noyaux, une phase rotative de répartition dudit sirop sur les noyaux appelée également temps de pause, et une phase de séchage de chaque nouvelle couche de sirop réalisée par soufflage d'air chaud et sec.

Selon l'invention, le procédé est caractérisé en ce que les particules d'hydrate de carbone acariogène ont une granulométrie moyenne de 650 à 750 µM, l'hydrate de carbone étant le maltitol.

Selon la présente invention, le procédé est caractérisé en ce que la composition de chewing gum comporte entre 5 et 20%, de préférence entre 8 et 13% d'une poudre d'hydrate de carbone acariogène d'une granulométrie moyenne de 650µm à 750µm, l'hydrate de carbone étant le maltitol.

### DESCRIPTION DETAILLEE DES MODES DE REALISATION

La présente invention concerne un procédé de fabrication d'un chewing-gum acariogène possédant une croustillance améliorée lors de sa mastication, caractérisée en ce que ladite composition de chewing-gum comporte des particules croustillantes d'au moins un hydrate de carbone acariogène, l'hydrate de carbone étant le maltitol.

Plus précisément, la présente invention concerne un procédé de fabrication d'un chewing-gum acariogène possédant une croustillance améliorée lors de sa mastication selon la revendication 1 .

Dans la présente invention, on entend par « acariogène », les compositions de chewing-gum qui n'induisent pas de caries lorsqu'elles sont consommées.

De manière plus précise, les compositions de chewing-gum mises en œuvre dans le procédé de l'invention entrainent une moindre acidification par les bactéries de la bouche que des compositions de chewing-gum contenant des sucres classiques tels que le saccharose, le glucose ou le fructose.

L'effet acariogène est en effet dû à la présence, dans la cavité buccale, d'un grand nombre et d'une grande variété de bactéries, notamment des bactéries cariogènes (les streptocoques mutants en particulier) qui colonisent la plaque dentaire (ou film dentaire) et métabolisent et fermentent les sucres des aliments en entraînant la production d'acides, notamment d'acide lactique. Ces derniers permettent un abaissement du pH périphérique de la dent en dessous du pH fatidique de 5,7, qui a pour conséquence de dissoudre l'hydroxyapatite de l'émail dentaire et d'y créer des cavités. La dent est alors fragilisée car l'acidité importante provoque une déminéralisation (dissolution) de l'émail dentaire. Puis la carie progresse à l'intérieur de la dent et atteint la pulpe en occasionnant des douleurs.

En effet, des consommations répétées ainsi qu'un long temps de séjour en bouche des aliments riches en glucides fermentescibles (contenant sucre ou saccharose, fructose, amidon...) forment un terrain propice au développement des caries.

Dans la présente invention, on entend par « hydrate de carbone acariogène », tous les glucides non fermentescibles ou glucides non acidogènes.

Ainsi les compostions de chewing-gums mises en œuvre dans le procédé de la présente invention satisfont au label Sympadent.

Dans toute la présente invention, on considérera que tous les pourcentages exprimés, sauf mention contraire explicite, le sont par rapport au poids total de la composition de chewing-gum mise en oeuvre.

Dans la présente invention, le terme chewing-gum est utilisé indifféremment pour désigner les chewing-gums et les bubble-gums. La différence entre ces deux types étant d'ailleurs assez floue. On a coutume de dire que les chewing-gums se mâchent alors que les bubble gums sont destinés à faire des bulles, et donc sont traditionnellement plutôt consommés par un jeune public.

La plupart des chewing-gums, qu'ils soient avec ou sans sucre, dragéifiés ou non, comprennent essentiellement une gomme de base insoluble dans l'eau, des agents sucrants hydrosolubles apportés sous forme liquide et/ou pulvérulente et des arômes. Ils comprennent souvent d'autres ingrédients tels que des colorants, des émulsifiants, des plastifiants, des édulcorants intenses, de l'eau, etc...

La gomme de base est l'ingrédient qui différencie les chewing-gums des autres confiseries. Cette substance élastique possède la propriété de pouvoir être mâchée pendant des heures sans induire de modifications substantielles de sa texture. Elle ne se délite pas non plus au cours de la mastication. La gomme de base est un ingrédient très important dans la fabrication des centres. Elle varie en fonction du produit fini, chewing-gum ou bubble-gum, du format en sticks ou en coussinets, avec ou sans sucre etc.. Les gommes de base d'aujourd'hui sont vraiment très différentes de celles utilisées dans le passé. Elles contiennent des élastomères synthétiques, des plastifiants, des agents assou-plissants ou ramollissants, texturants et émulsifiants ainsi qu'une variété d'ingrédients spécifiques qui vont lui conférer ses propriétés particulières en fonction de l'application finale.

La gomme de base constitutive de la composition de chewing-gum mise en œuvre dans le procédé de l'invention est de préférence ordinaire et semblable à celles qui sont couramment utilisées. Elle peut représenter, selon qu'il s'agit d'une tablette à macher, d'un bubble-gum, d'un centre a dragéifier, ou d'un chewing-gum hypocalorique, environ 15 % à environ 50 % de la composition mise en œuvre dans le procédé de l'invention. Sa nature est également adaptée au type de chewing-gum fabriqué. Elle peut également comprendre des élastomères synthétiques et/ou naturels comme le polyisoprène, (l'acétate de polyvinyle, le polyisobutylène, des latex, des résines comme les résines terpéniques, les esters et les alcools de polyvinyle, des matières grasses ou des cires comme par exemple la lanoline, les huiles végétales partiellement hydrogénées ou non, les acides gras, les esters partiels de glycérol, la paraffine, les cires microcristallines, des agents de charge comme du talc, le carbonate de calcium, des plastifiants d'élastomères comme le triacétate de glycérol, le monostéarate de glycérol, les dérivés de collophanes, des émulsifiants comme la lécithine, les esters de sorbitol, des colorants ou des agents de blanchiment, des antioxydants, des agents anticollants comme le mannitol.

Selon un mode préférentiel, la teneur en gomme de base de la composition de chewing-gum mise en œuvre dans le procédé de l'invention est comprise entre 15 % et 40 %.

Selon un mode préférentiel, la teneur en gomme de base de la composition de chewing-gum mise en œuvre dans le procédé de l'invention est comprise entre 25 % et 35 %.

La fabrication des centres de chewing-gum ou bubblegum sans sucre, également appelés coussinets, nécessite le mélange de gomme de base telle que précédemment décrite avec des polyols, utilisés comme édulcorants de charge. Typiquement, la gomme de base représente entre 25% et 35% des centres, et les polyols entre 65 et 80%, le reste pouvant être constitué par des arômes et/ou des édulcorants intenses de type aspartame ou acésulfame-K.

Dans un mode de réalisation secondaire de l'invention, les édulcorants de charge sont constitués d'oses non fermentescibles pouvant être choisis dans le groupe constitué par l'isomaltulose, le xylose, le xylulose, l'allulose, l'arabinose, le leucrose, le tagatose, le tréhalulose et le raffinose.

Dans un autre mode de réalisation secondaire, les édulcorants de charge sont constitués d'un mélange de polyols et d'oses non fermentescibles pouvant être choisis dans le groupe constitué par l'isomaltulose, le xylose, le xylulose, l'allulose, l'arabinose, le leucrose, le tagatose, le tréhalulose et le raffinose.

Dans un mode de réalisation préféré de l'invention, les édulcorants de charge sont constitués uniquement de polyols.

Ainsi, la composition de chewing-gum mise en œuvre dans le procédé de l'invention contient entre 65 et 80% de polyols, sous la forme pulvérulente et/ou liquide.

Le choix de la granulométrie des poudres de polyols est très important. Pour éviter d'obtenir une texture désagréable sableuse en bouche, il est connu d'utiliser les granulométries suivantes : poudre de sorbitol de 200µm de diamètre, poudre de mannitol de 60µm de diamètre, poudre de xylitol de 90µm de diamètre et poudre de maltitol de 35µm de diamètre. Comme les cristaux de sucre, les cristaux de maltitol, mannitol et xylitol possèdent plus ou moins une forme cubique. Ainsi, afin d'éviter une texture sableuse sur la langue lors de la mastication, ces cristaux doivent avoir une petite granulométrie. Les particules de sorbitol possèdent une structure microscopique dendritique, c'est-à-dire comme un enchevêtrement d'aiguilles. Cette structure particulière permet d'utiliser un sorbitol poudre avec une granulométrie moyenne de 200µm sans induire de texture sableuse en bouche.

Parmi les édulcorants massiques ou édulcorants de charge que sont les polyols, il peut en particulier s'avérer intéressant d'utiliser du mannitol pour prolonger la saveur sucrée, de l'érythritol et du xylitol pour apporter une certaine fraîcheur du fait de leur propriété de « cooling effect », du sorbitol pulvérulent ou une poudre de maltitol de pureté inférieure à 95% pour ajuster la texture et rendre celle-ci plus ferme. Lorsqu'une poudre de maltitol d'une pureté comprise entre 82% et 94% est ajoutée, par exemple dans ce but, elle pourra l'être éventuellement en prémélange en toute proportion avec le maltitol pulvérulent d'une pureté supérieure à 95%, ou bien avec un autre ingrédient de la composition selon l'invention. Cette composition peut également comprendre des édulcorants intenses tels que l'aspartame, l'alitame, l'acésulfame, le sucralose, sous forme libre et/ou encapsulée.

Pendant la première phase de production des centres de chewing-gum, qui consiste à pétrir tous les ingrédients entrant dans la composition à une température comprise entre 50°C et 80°C, la phase liquide et la gomme de base enrobent les édulcorants cristallisés, les dissolvent jusqu'à saturation de la phase liquide. Cependant, comme la température diminue lors du procédé de refroidissement, la solubilité des polyols diminue également et la phase cristalline dissoute va partiellement recristalliser ce qui va conduire à un durcissement du chewing-gum. Ainsi, le rôle de la phase liquide est de contrôler la recristallisation des édulcorants cristallisés afin de prévenir les phénomènes de fragilité ou de durcissement excessif des chewing-gums pendant la production mais aussi pendant le stockage. Si le sirop d'anti-cristallisation contient une quantité significative de polyols dissous similaires à ceux de la phase cristalline, la cristallisation pendant le procédé de production ou durant le stockage aura lieu et conduire à des chewing-gums trop fragiles ou trop durs.

L'eau du chewing-gum peut être apportée sous forme d'eau libre ou par d'autres constituants.

La composition de chewing-gum selon l'invention peut comprendre un agent de liaison, dans une concentration de 0,1 % à 30 %. Celui-ci peut être choisi de préférence parmi l'eau, la glycérine, les sirops de mono, di, oligo ou polysaccharides, hydrogénés ou non, et les sirops d'agents de charge hypocaloriques et les mélanges quelconques d'entre eux.

Les sirops de mono, di, oligo ou polysaccharides peuvent être par exemple des sirops de xylitol, de sorbitol, de maltitol, de lactitol, d'isomaltulose, d'isomaltulose hydrogéné, d'érythrose, d'érythritol, des sirops, de préférence hydrogénés, issus de l'hydrolyse d'amidons ou d'inulines, contenant des oligosaccharides et/ou des polysaccharides. Quant aux sirops d'agents de charge hypocaloriques, on préfère retenir en particulier les sirops de polydextrose, de polyglucose, de dextrine.

Selon un mode de réalisation préférentiel, la composition de chewing-gum peut contenir jusqu'à 20% d'un sirop de maltitol.

A titre d'exemple, on peut citer les sirops de maltitol commercialisés par la Demanderesse sous la marque LYCASIN^{®}, comme le LYCASIN^{®} 80/55 (75% de matière sèche et 50-55% en matière sèche de maltitol), le LYCASIN^{®} 85/55 (85% de matière sèche et 50-55% en matière sèche de maltitol). Ces sirops ou agents anti-cristallisation prêts à l'emploi sont particulièrement adaptés pour une utilisation conjointe avec tous les polyols cristallisés cités ci-dessous, et permettent ainsi d'apporter une plasticité améliorée au chewing-gum.

La composition de chewing-gum mise en œuvre dans le procédé de l'invention contient aussi un agent aromatisant. Cet agent peut comprendre des composés naturels et/ou de synthèse. Il peut s'agir en particulier d'arômes de menthe, de cannelle, d'orange, de citron, de limette ou d'arômes correspondant à d'autres fruits ou plantes tels par exemple les arômes de pomme, de fraise, de banane, de cerise ou de mélanges de fruits.

L'agent aromatisant est employé en une quantité appropriée aisément déterminable par l'homme du métier par de simples essais de routine, en considérant la nature de la gomme de base, la quantité de gomme de base, le type de chewing-gum et les caractéristiques de cet agent aromatisant. D'ordinaire, il sera employé à un taux compris entre environ 0,2 % et environ 3 %. De préférence, on retiendra, notamment pour les agents aromatisants hydrophobes, des quantités suffisantes pour plastifier la gomme de base sans que le ramollissement de celle-ci soit excessif. Pour cela, on retiendra plutôt une teneur en agent aromatisant comprise entre 0,7 % et 2,5 %, l'idéal étant de retenir une teneur comprise entre 1 % et 2 %.

Le dosage en agent aromatisant dépendra également de la richesse de celui-ci en composés d'arômes, c'est à dire en composés ayant réellement un effet rétro-olfactif. De plus, ce dosage variera avec la nature physique de l'agent aromatisant. Par exemple, pour une forme encapsulée, le dosage sera d'ordinaire plus faible.

L'agent aromatisant peut se présenter sous forme d'un produit unique ou sous deux ou plusieurs formes physiques différentes comprenant essentiellement les mêmes composés d'arôme. On peut employer également plusieurs agents aromatisants de natures différentes et d'états physiques identiques ou différents.

Des acides alimentaires peuvent être également ajoutés dans la composition conforme à l'invention, par exemple en tant qu'exhausteurs, à de faibles teneurs, notamment lorsqu'un arôme fruité est employé.

Les ingrédients et la gomme de base sont mélangés dans un pétrin pendant 15 à 20 minutes. Enfin de malaxage, la pâte atteint une température de 50°C environ. Puis la pâte à mâcher est versée à l'intérieur d'une extrudeuse. Bien pressée, elle forme maintenant des bandes plus ou moins épaisses. Les bandes passent ensuite dans le laminoir et sont découpées en tablettes ou noyaux. Après refroidissement, les tablettes ou les noyaux de dragées sont maintenus à une température et une humidité précises pendant 6 à 48 heures. Cette phase est très contrôlée, la qualité des gommes à mâcher en dépend.

Ainsi, la présente invention concerne un procédé de fabrication d'un chewing-gum selon la revendication 1.

En effet, la Demanderesse a constaté après de longs travaux de recherche que l'on pouvait améliorer la qualité organoleptique, et plus particulièrement la croustillance d'un chewing-gum, en lui apportant dans son centre des particules croustillantes d'hydrate de carbone acariogène possédant une certaine granulométrie, l'hydrate de carbone étant le maltitol.

Dans la présente invention, les particules de maltitol sont ajoutées directement à la gomme de base lors de la préparation des centres. Ces particules d'une granulométrie moyenne de 650µm à 750µm, sont malaxées dans le pétrin avec la gomme de base notamment, et se retrouvent donc intimement mélangées et liées à ladite gomme de base, pour former au final une seule et même masse homogène. Les centres obtenus sont donc uniformes et ne sont pas constitués de plusieurs couches comme déjà connu de l'art antérieur.

Plus précisément encore, les particules de maltitol sont ajoutées directement dans le pétrin avec la gomme, sans subir de prétraitement particulier pour leur conférer la croustillance recherchée. En effet, les particules de maltitol sont ajoutées directement et « telles quelles » dans la gomme de base et c'est leur granulométrie particulière qui apporte directement le caractère croustillant aux centres.

De plus, la Demanderesse a également démontré qu'en enrobant ladite composition par un enrobage sans sucre obtenu par un procédé de dragéification dure sans sucre, la confiserie obtenue est caractérisée par deux niveaux de croustillance. Le premier niveau est apporté par le procédé de dragéification dure et le second par les particules croustillantes maltitol présentes dans le centre de la confiserie.

Ainsi, la confiserie obtenue est doublement croustillante et offre au consommateur un effet de croustillance dit « long lasting », c'est-à-dire persistant dans le temps au cours de la mastication.

Par « amélioration de la qualité organoleptique », on entendra dans la présente invention, l'amélioration de la texture du chewing-gum et plus particulièrement sa croustillance.

La croustillance des produits dragéifiés est un concept subjectif et complexe dans lequel plusieurs facteurs doivent être appréciés comme les caractéristiques du centre, l'épaisseur de l'enrobage, la quantité des agents liants enrobant, la teneur en eau, la dureté et la friabilité de l'enrobage, etc.

D'une façon plus pragmatique, la croustillance se définit comme la sensation de croquant sous la dent, qui persiste pendant en temps plus ou moins long au cours de la mastication. Jusqu'à présent, la croustillance d'un chewing-gum était obtenue par la seule couche externe qui se brise en petit morceaux toujours croquants, contrastant avec le coeur de la dragée. La dragée idéale doit résister légèrement sous la dent, croustiller, se mêler ensuite en petits morceaux au centre mou du chewing-gum pour former un ensemble aux textures contrastées. Le défi des fabricants de chewing-gums est de proposer des dragées croustillantes non seulement lors de l'achat, mais aussi lors de la consommation, parfois longtemps après, alors que les chewing-gums ont subi des chocs ou une exposition à l'humidité, voire à des conditions tropicales.

Ainsi, l'invention concerne un procédé de fabrication d'un chewing-gum selon la revendication 1.

La croustillance de la composition de chewing-gum mise en œuvre dans le procédé de l'invention n'est pas seulement conférée par la couche externe, mais également par le centre de la dragée dans lequel sont incorporées les particules de maltitol dont la granulométrie participe à la croustillance.

La composition mise en œuvre dans le procédé de l'invention est caractérisée en ce que les particules de maltitol présentes dans le centre ont une granulométrie moyenne de 650 à 750 µm.

La Demanderesse a en effet constaté que cette plage de granulométrie bien spécifique pour les particules de maltitol était particulièrement intéressante, car elle permettait d'obtenir une grande satisfaction du point de vue de la croustillance. Lorsque la granulométrie du maltitol n'est pas dans cette plage
préférentielle de 650 µm à 750 µm, l'effet croustillant est bien présent mais moins fort. Il y a donc un effet seuil de la granulométrie. En dessous comme au-dessus de cette plage, l'effet croustillant est moins marqué.

On entend par granulométrie moyenne au sens de la présente invention un diamètre moyen de particules. Ces valeurs sont déterminées par un granulomètre a diffraction LASER type LS 230 de la société BECKMAN-COULTER, équipé de son module de dispersion poudre (voie sèche), en suivant le manuel technique et les spécifications du constructeur. Les conditions opératoires de vitesse de vis sous trémie et d'intensité de vibration de la goulotte de dispersion sont déterminées de manière à ce que la concentration optique soit comprise entre 4° et 12°, idéalement 8°. La gamme de mesure du granulomètre à diffraction LASER type LS 230 est de 0,04 µm à 2.000 µm. Les résultats sont calcules en % volumique, et exprimes en µm. La courbe de distribution granulométrique permet également de déterminer la valeur du diamètre moyen volumique (moyenne arithmétique) D4,3.

Dans un mode préférentiel, la composition de chewing-gum mise en œuvre dans le procédé de l'invention est caractérisée en ce qu'elle comporte entre 5 et 20%, de préférence entre 8 et 13% d'une poudre d'hydrate de carbone acariogène d'une granulométrie moyenne de 650µm à 750µm, l'hydrate de carbone étant le maltitol.

Les nombreux essais réalisés par la Demanderesse ont en effet permis de démontrer que ce pourcentage bien particulier de maltitol au sein de la composition de chewing-gum permettait d'obtenir des résultats en **terme** de croustillance particulièrement intéressants.

Dans un mode de réalisation particulier, la composition de chewing-gum comporte entre 8 et 13% d'une poudre d'hydrate de carbone acariogène d'une granulométrie moyenne comprise entre 650 et 750 µm, l'hydrate de carbone étant le maltitol.

La teneur en maltitol de granulométrie de 650µm à 750µm est ajustée dans chaque recette en fonction du niveau de croustillance finale souhaitant être obtenue. Plus la croustillance désirée est importante, et plus la teneur en particules croustillantes de maltitol utilisée est importante. Cette teneur est également à adapter par rapport aux propriétés de la gomme de base utilisée. L'homme du métier est tout à fait capable de déterminer quel est le niveau de particules de maltitol à incorporer dans la fabrication des centres de chewing-gum à dragéifier en fonction des propriétés de dureté et d'élasticité de la gomme de base.

Le terme polyols désigne dans la présente invention, les produits obtenus par hydrogénation catalytique de sucres réducteurs simples donc possédant un DP égal à 1 (DP = Degré de Polymérisation), mais aussi de sucres réducteurs plus complexes composés des homologues supérieurs possédant un DP supérieur ou égal à 2 de ces sucres simples, tels que les disaccharides, oligosaccharides et polysaccharides ainsi que leurs mélanges. Généralement, les sucres réducteurs simples que l'on destine à l'hydrogénation catalytique pour l'obtention des compositions de polyols du type de celles de l'invention sont le glucose, le xylose, le fructose et le mannose. Les polyols obtenus sont alors le sorbitol, le xylitol et le mannitol. Les disaccharides sont le plus souvent le maltose, le maltulose, l'isomaltulose et le lactose, qui conduisent par hydrogénation, au maltitol, à l'isomalt, à l'isomaltitol et au lactitol. Les oligosaccharides et polysaccharides, qui sont des produits de poids moléculaires plus élevé, proviennent d'ordinaire d'une hydrolyse acide et/ou enzymatique d'amidons et/ou de fécules, de xylanes ou de fructanes comme l'inuline, mais peuvent aussi être obtenus par recombinaison acide et/ou enzymatique de mono ou disaccharides tels que ceux cités plus haut.

Par conséquent, le terme polyol désigne dans la présente invention un polyol choisi notamment dans le groupe comprenant le sorbitol, le xylitol, l'érythritol, le maltitol, l'isomalt, l'isomaltitol, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS) et leurs mélanges.

Dans un mode plus préférentiel, la composition de chewing gum mise en œuvre dans le procédé de l'invention est caractérisée en ce que la poudre de maltitol cristallisé présentant une richesse en maltitol supérieure à 99,5 % en poids, de préférence supérieure ou égale à 99,7 % en poids, plus préférentiellement supérieure à 99,8 % en poids, caractérisée par :
- une répartition granulométrique en volume, déterminée par granulométrie laser, présentant :
   * moins de 20 %, de préférence moins de 15%, plus préférentiellement mains de 10 % et plus préférentiellement encore moins de 5 % de particules de taille inférieure à 200 µm,
   * moins de 6 % de particules de taille inférieure à 100 µm,
   * moins de 2 % de particules de taille inférieure à 40 µm, et
- une valeur d'écoulement inférieure ou égale à 10 secondes, de préférence inférieure ou égale à 5 secondes,
- une densité aérée supérieure à 0,85 g/ml, de préférence comprise entre 0,88 et 1,00 g/ml, une densité tassée supérieure à 0,97 g/ml, de préférence comprise entre 0,98 et 1,05 g/ml et une compressibilité inférieure à 17%, de préférence inférieure à 10%, et plus préférentiellement encore inférieure à 5 %.

La poudre de maltitol cristallisé de ce mode préférentiel de l'invention est surtout caractérisée par la faible teneur en particules de petite taille.

A titre d'exemple, on peut citer la poudre de maltitol développée par la Demanderesse, commercialisée sous l'appellation SweetPearl^{®} P700, et protégée dans la demande de brevet EP 2249870.

Dans un exemple de réalisation particulier, la composition de chewing-gum mise en œuvre dans le procédé de l'invention comporte entre 8 et 13% d'une poudre de maltitol d'une granulométrie moyenne comprise entre 650 et 750 µm.

Il est connu depuis très longtemps d'ajouter à la gomme de base des polyols soit sous la forme de poudre, soit sous la forme liquide, soit sous les deux formes. Par contre, il est connu seulement d'utiliser des poudres de polyols possédant une granulométrie faible ou fine, comme précédemment décrit dans la présente demande, afin de s'affranchir d'une texture sableuse ou crissante en bouche.

Ainsi, la Demanderesse a vaincu un véritable préjugé technique en incorporant dans les centres de chewing-gum une poudre de maltitol présentant une granulométrie plus grosse que les compositions de chewing-gum jusque-là décrites dans l'art antérieur, sans pour autant obtenir de texture désagréable en bouche. Au contraire, les qualités organoleptiques des produits finis étaient bien supérieures en termes de croustillance que les produits jusqu'alors fabriqués.

Selon un mode préférentiel, la présente invention concerne une composition de chewing-gum acariogène mise en œuvre dans le procédé de l'invention possédant une croustillance améliorée, caractérisée en ce qu'elle comporte :
- de 15 à 40% de gomme de base
- de 65 à 80% de polyols sous la forme pulvérulente et/ou liquide, dont 5 à 20% est du maltitol sont sous la forme d'une poudre de maltitol d'une granulométrie moyenne de 650µm à 750µm.
- de 0,2 à 3% d'un agent aromatisant,
et qu'elle est dragéifiée.

En effet, non seulement la Demanderesse a trouvé que l'on pouvait améliorer l'effet « long lasting » de la croustillance d'un chewing-gum sans sucre dragéifié en y incorporant des particules de maltitol de grosse granulométrie dans le centre, mais elle a également démontré qu'avec cette incorporation il était tout à fait possible d'obtenir une confiserie dragéifiée et croustillante à l'extérieur avec des temps de dragéification considérablement réduits par rapport aux procédés connus de l'art antérieur.

En effet, la Demanderesse a démontré que l'incorporation de particules de maltitol de grosse granulométrie dans le centre permettait de réaliser des cycles de dragéification moins nombreux et donc moins longs, pour arriver à un résultat final supérieur au niveau organoleptique.

Dans un autre mode de réalisation de l'invention, la Demanderesse a également trouvé que la sensation de croustillance au niveau des centres pouvait également être apportée par des inclusions d'un autre type.

Ainsi et de façon non limitative, les particules croustillantes contenues au niveau des centres peuvent également être constituées par des sucres cuits broyés, des comprimés broyés, des caramels broyés ou toute autre confiserie pouvant être broyée, des fruits secs broyés, des biscuits broyés, des corn flakes ou autres céréales broyés, ou tout autre aliment qui une fois broyé peut également apporter un caractère croustillant au niveau des centre de chewing gums.

Dans ce cas bien précis, la teneur en inclusions autre que les particules maltitol sera ajustée par l'homme du métier de façon à maintenir une certaine cohésion au niveau de la gomme de base lors de son malaxage avec ces dernières.

Le procédé de l'invention permet l'obtention d'un chewing-gum présentant une double croustillance, c'est-à-dire une première sensation croustillante apportée par l'enrobage qui va être rompu en petit morceaux sous les dents, mais également par les particules comprises dans le centre qui vont également renforcer l'effet croustillant du chewing-gum. Cet effet de permanence de la croustillance est défini dans la présente demande par un « long lasting » de la croustillance.

Ainsi, cet effet de double croustillance permet de réduire considérablement les temps de dragéification, et par conséquent un gain financier très important pour les fabricants de chewing-gums dragéifiés sans nuire à la qualité finale des produits dragéifiés mais au contraire en en améliorant les qualités organoleptiques.

Il est connu depuis longtemps que les chewing-gums dragéifiés possèdent un effet croustillant. C'est d'ailleurs cet aspect qui est recherché par les nombreux consommateurs de ce type de confiseries.

La Demanderesse a mené dans le passé de nombreux travaux dans ce sens et a réussi à démontrer que le maltitol, en plus de son aspect acariogène, permettait d'obtenir des produits possédant une croustillance et une saveur sucrée persistantes dans la bouche, identiques à celles apportées par les confiseries traditionnelles dragéifiées au sucre. Techniquement, cela s'explique à une résistance significative à la reprise en eau des produits dragéifiés et à une excellente stabilité au cours du temps. Ces travaux de recherche portaient essentiellement sur les polyols utilisés dans
les sirops de dragéification. La Demanderesse a démontré dans ses travaux passés qu'en fonction du polyol employé, on pouvait obtenir des produits dragéifiés plus ou moins croustillants. Le niveau de croustillance était fonction à la fois du polyol utilisé mais également de l'épaisseur de l'enrobage. Plus le taux de grossissage, i.e. l'épaisseur de la couche croustillante, est important, plus l'effet croustillant est marqué.

Le taux de grossissage, encore appelé le taux final d'enrobage, se définit par l'accroissement en poids des produits. Il se calcule par le ratio du poids du produit fini (dragéifié) sur le poids du centre ou du noyau avant dragéification.

Or la présente invention va à nouveau à l'encontre de ce préjugé établi et vérifié depuis très longtemps. Avec des taux de grossissage moindres, mais grâce à la présence de particules de maltitol de grosse granulométrie dans le centre, il est tout à fait possible d'obtenir des chewing-gums dragéifiés et possédant un effet long lasting sur la croustillance.

La dragéification dure vise à obtenir une couche croustillante et sucrée, toujours très appréciée par les consommateurs.

La dragéification dure est une opération unitaire employée dans bon nombre de domaines et notamment en confiserie ou en pharmacie. Elle peut concerner également l'industrie des additifs que sont les arômes, les édulcorants, les vitamines, les enzymes, les acides et les produits à base de plantes. Cette opération consiste à créer un revêtement dur à la surface de produits solides ou pulvérulents, afin de les protéger pour diverses raisons ou bien afin de les rendre attractifs visuellement ou gustativement.

L'enrobage du noyau est effectué dans une cuve tournant autour de son axe et appelée drageuse, à l'intérieur de laquelle se trouve une pluralité de noyaux formant une masse en mouvement, à la surface de laquelle on répartit à l'état liquide la matière constitutive de la future enveloppe.

La dragéification dure nécessite toujours l'utilisation d'un sirop contenant des matières cristallisables. Le revêtement dur et cristallin s'obtient par application de ce sirop et évaporation de l'eau apportée par celui-ci. Cette étape de séchage s'effectue par soufflage d'un air chaud dont la température est ajustée en fonction de la dureté des centres.

Le terme dragéification dure employé dans la présente invention comprendra également les techniques très voisines que sont le lissage et le givrage. Le lissage consiste en une ou deux applications ou charges d'un sirop cristallisable dilué par rapport à celui utilisé en dragéification dure. Le but est souvent de parfaire l'aspect de surface de produits dragéifiés. Une dragéification dure est souvent suivie d'un lissage. Le givrage vise également à améliorer l'aspect des produits, mais aussi à isoler ces derniers de l'humidité de l'atmosphère. Cette technique ressemble à une dragéification dure, en ce sens qu'un sirop cristallin est utilisé. La différence essentielle réside dans le fait que le nombre de cycles de dragéification réalisé n'est que d'un, deux ou trois seulement.

La dragéification est un procédé long et laborieux, incluant un grand nombre d'étapes successives. Chacune de ces étapes, appelée également cycle de dragéification, inclut typiquement une phase d'application, généralement par pulvérisation, d'un sirop de dragéification (contenant un ou plusieurs polyols, mais aussi parfois des liants comme la gomme arabique ou la gélatine, des colorants comme le TiO₂, des édulcorants intenses...) sur les noyaux, une phase rotative de répartition dudit sirop sur les noyaux appelée également temps de pause, et une phase de séchage de chaque nouvelle couche de sirop réalisée par soufflage d'air chaud et sec. Cette succession de cycles doit être répétée un très grand nombre de fois, de l'ordre de dix à quatre-vingt fois, de manière à obtenir le taux de grossissage voulu.

L'épaisseur de l'enveloppe ou taux de grossissage est choisie en fonction notamment du noyau à dragéifier ou des effets recherchés. Aujourd'hui, la préoccupation majeure des fabricants des chewing-gums est d'obtenir des chewing-gums possédant une couche dure bien croustillante mais en réduisant les temps de dragéification.

Il est parfaitement connu de l'art antérieur que des chewing-gums dragéifiés présentant une bonne croustillance doivent avoir un taux de grossissage d'au moins 30%, et de préférence d'au moins 40%.

La présente invention permet d'obtenir des chewing-gums présentant une excellente croustillance avec des taux de grossissage de seulement 25%, ce qui représente une diminution d'au moins 20% de taux de grossissage par rapport aux chewing-gums dragéifiés de l'art antérieur. Les temps de fabrication sont donc considérablement réduits.

La dragéification dure sans sucre est connue depuis longtemps et de nombreux travaux ont été menés afin de réduire les temps de dragéification tout en permettant l'obtention de produits de qualité. Par exemple, une méthode visant à améliorer l'état de la technique, et permettant notamment d'obtenir des produits dragéifiés de très bonne qualité, avec des temps de dragéification relativement courts, et plus courts que les procédés connus de l'art antérieur a été décrite dans la demande de brevet EP 1,481,597 dont la Demanderesse est titulaire. Cette méthode permet d'obtenir des revêtements durs et croustillants à la surface d'un noyau, et comporte au moins un cycle de dragéification qui comprend une étape d'application d'un sirop de dragéification de richesse supérieure à 80% (la richesse étant la teneur en polyol concerné sur la teneur en matières sèches du sirop de dragéification) suivie d'une étape de séchage des noyaux et caractérisé en ce que le cycle ne comprend pas de temps de pause entre l'étape d'application du sirop de dragéification et l'étape de séchage des noyaux.

La demande EP 2108264 dont la Demanderesse est également titulaire décrit également un procédé de dragéification dure sans sucre permettant la création d'un revêtement dur à la surface d'un noyau en moins de deux heures en utilisant un procédé particulier.

Dans tous les précédés décrits jusqu'à présent dans l'art antérieur, on a toujours cherché à diminuer les temps de dragéification. A chaque fois les produits obtenus présentaient des taux de grossissage entre 30% et 40%, et plus particulièrement de l'ordre de 35%.

La présente invention concerne un procédé de dragéification dur qui permet d'obtenir des produits d'une qualité organoleptique supérieure aux produits de l'art antérieur et caractérisé en ce que les taux de grossissage sont diminués d'au moins 20% par rapport aux taux de grossissage décrits dans les procédés de l'art antérieur. Les temps de fabrication sont donc également considérablement réduits. Un autre avantage considérable est que la quantité de produits mis en oeuvre pour la dragéification est considérablement réduite. L'avantage financier est donc double : réduction au niveau du coût des matières premières mais également au niveau du temps du procédé.

Ainsi la présente invention concerne un procédé de fabrication d'un chewing-gum dragéifie acariogène caractérisé en ce qu'il comporte les étapes suivantes :
- fabrication d'une composition de chewing-gum en mélangeant au moins une gomme de base, un arôme et un hydrate de carbone acariogène sous la forme d'une poudre de granulométrie moyenne de 650µm à 750µm,
- extrusion du mélange précèdent,
- laminage,
- découpe,
- refroidissement
- dragéification des centres ainsi obtenus, l'hydrate de carbone étant le maltitol.

Plus précisément, ledit procédé de fabrication d'un chewing-gum dragéifié selon l'invention est caractérisé en ce que la composition de chewing-gum est obtenue en malaxant dans le pétrin la gomme de base, l'arôme et le maltitol sous la forme d'une poudre de façon à obtenir un mélange intime pouvant également être caractérisé comme une seule masse homogène. Les particules de maltitol sont donc parfaitement mélangées à la gomme de base à la fin de l'étape dite de malaxage. Et les centres obtenus sont donc uniformes et ne sont pas constitués de plusieurs couches.

Selon un mode préférentiel, le procédé est caractérisé en ce que l'étape de dragéification comprend un ou plusieurs cycles comprenant chacun une phase d'application, généralement par pulvérisation, d'un sirop de dragéification (contenant un ou plusieurs polyols, mais aussi parfois des liants comme la gomme arabique ou la gélatine, des colorants comme le TiO₂, des édulcorants intenses...) sur les noyaux, une phase rotative de répartition dudit sirop sur les noyaux appelée également temps de pause, et une phase de séchage de chaque nouvelle couche de sirop réalisée par soufflage d'air chaud et sec.

La teneur en matières sèches du sirop de dragéification est comprise entre 60 et 90%, de préférence encore entre 70 et 85%, et plus préférentiellement encore supérieure ou égale à 76% et inférieure à 80%.

Le sirop mis en oeuvre est porté à une température inférieure à 100°C avant application. Dans un mode de réalisation avantageux, la température du sirop est comprise entre 50°C et 95°C, et de manière plus avantageuse encore entre 70°C et 80°C.

Dans un mode préférentiel de réalisation de l'invention, l'étape de dragéification est réalisée jusqu'à obtenir des taux de grossissage compris entre 25% et 40%, et de préférence entre 25% et 31%, et plus préférentiellement encore de 25% à 28%.

Dans un mode préférentiel, le procédé permet d'obtenir des produits de qualité présentant un taux de grossissage réduit d'au moins 20% par rapport aux taux de grossissage décrits dans l'art antérieur.

Dans un mode de réalisation avantageux de l'invention, le procédé est caractérisé en ce que la composition de chewing gum comporte entre 5 et 20%, de préférence entre 8 et 13% d'une poudre d'hydrate de carbone acariogène d'une granulométrie moyenne de 650µm à 750µm, l'hydrate de carbone étant le maltitol.

Dans beaucoup de procédés de dragéification, le sirop de dragéification est susceptible de devenir collant lorsqu'il est appliqué sur les noyaux et qu'il commence à sécher. Pour réduire les phénomènes de collage, une poudre de polyol, encore appelée agent de charge, peut-être appliquée après la phase de d'application/pulvérisation du sirop de dragéification sur les noyaux, pour accélérer le séchage du revêtement avant qu'il ne devienne trop collant. Il est à noter que le polyol présent majoritairement dans les sirops de dragéification peut être ou non différent par nature du polyol présent à titre principal dans l'agent de charge. D'autres agents de charge peuvent également être utilisés, comme par exemple le talc ou le carbonate de calcium (CaCO₃).

Le sirop de dragéification peut être préparé à partir de tous polyols sous forme de poudre sous les marques SweetPearl^{®} pour le maltitol et Xylisorb^{®} pour le xylitol, tous deux commercialisés par la Demanderesse. On peut également utiliser des sirops prêts à l'emploi tels que par exemple des sirops de maltitol à hautes teneurs en maltitol.

La mise en oeuvre de l'invention telle que décrite ci-avant permet d'obtenir des produits dragéifiés de très bonne qualité avec des temps de dragéification considérablement réduits, et plus courts que les procédés décrits dans l'art antérieur.

Ainsi, la Demanderesse a démontré que l'on pouvait améliorer l'effet « long lasting » de la croustillance d'un chewing-gum acariogène dragéifié en y incorporant des particules de maltitol de grosse granulométrie dans le centre, mais ses recherches ont également démontré qu'en jouant sur l'activité de l'eau du centre, l'effet sur la croustillance pouvait également être amélioré.

Ainsi, la composition de chewing-gum acariogène mise en œuvre dans le procédé de l'invention possédant une croustillance améliorée, est caractérisée en ce qu'elle comporte une gomme de base, un arôme et du maltitol sous la forme d'une poudre de maltitol de granulométrie moyenne 650µm à 750µm, et en enrobage sans sucre, ledit enrobage présentant un taux de grossissage réduit. Notamment, le taux de grossissage des compositions mises en œuvre dans le procédé de la présente invention peut être compris entre 25% et 40%, et de préférence entre 25% et 31%, et de préférence encore entre 25% et 28%.

L'invention sera mieux comprise à l'aide des exemples suivants qui se veulent illustratifs mais non limitatifs.

### Exemple 1

Cet exemple porte sur la fabrication d'une composition de chewing-gum comprenant une gomme de base, un arôme et un polyol sous la forme d'une poudre de granulométrie moyenne supérieure à 300µm, et un enrobage sans sucre.

Le témoin a été réalisé avec une composition de chewing-gum ne contenant pas de particules de polyol de grosse granulométrie.

Tous les pourcentages exprimés le sont par rapport au poids total de la composition de chewing-gum mise en oeuvre.

Les centres ainsi obtenus ont ensuite été dragéifiés.

### 1. Préparation des compositions de chewing-gums

### Ingrédients mis en oeuvre dans les compositions de chewing-gum

| **Ingrédients** | **Composition témoin (%)** | **Composition selon l'invention (%)** |
|---|---|---|
| Gomme de base GB Optima (CAFOSA) | 30 | 30 |
| SweetPearl^{®} P35 | 60,60 | 50,50 |
| SweetPearl^{®} P700 | - | 9 |
| Sirop de maltitol Lycasin^{®} 85/55 | 7 | 7,50 |
| Glycérine | 0,50 | 0,35 |
| Arôme menthe/vanille liquide | 1,50 | 1,50 |
| Arôme menthe/vanille poudre | 0,20 | 1 |
| Edulcorant intense (Aspartame) | 0,20 | 0,15 |
| TOTAL | 100 | 100 |
| Le SweetPearl^{®} P35 est une poudre de maltitol cristalline, commercialisée par la Demanderesse de granulométrie très fine, d'environ 35µm. | | |
| Le SweetPearl^{®} P700 est une poudre de maltitol, commercialisée par la Demanderesse de grosse granulométrie, d'environ 700µm, et plus généralement comprise entre 650 µm et 750 µm. | | |

### Mode opératoire pour la préparation des compositions de chewing-gum témoin et selon l'invention

- Mélange : procédure en minutes - Réalisé dans un pétrin bras en Z à 45°C - Fabrication de batch de 60 kg de centre
   0 min : Introduire la gomme de base fondue (étuvée une nuit à 50°C) et la moitié du SweetPearl^{®} P35.
   3 min : Ajouter le Lycasin^{®} 85/55.
   5 min : Ajouter l'autre moitié du SweetPearl^{®} P35.
   9 min : Ajouter la glycérine.
   10 min : Ajouter l'arôme de menthe/vanille en poudre.
   12 min : Ajouter l'arôme de menthe/vanille liquide.
   14 min : Ajouter le SweetPearl^{®} P700 (que pour le batch de la composition selon la présente invention).
   15 min : Décharger le pétrin (la pâte est à environ 50°C). Former des pains d'environ 2 kg et les stocker 1 heure à 50% d'HR et à 20°C. Les pains doivent être à environ 48°C pour l'extrusion.

### Extrusion (Appareil Togum TO - E82)

- Consigne de température du corps = 36°C
- Consigne de température de la tête = 39°C.

### - Laminage 4 postes - Prédécoupe 2 postes (Appareil Togum TO - W191)

- Saupoudrage de la bande de chewing-gum avec un mélange 90/10 mannitol/talc.
- Maturation
- Stocker les plaques prédécoupées de coussinets à environ 15°C-50% HR pendant environ 24h avant de les dragéifier.

### 2. Dragéification

Dans cet exemple, l'étape de dragéification est réalisée avec du maltitol et un arôme menthe Matériel utilisé : drageuse DRIACOATER 1200 contenant 50 Kg de coussinets de chewing-gums

### 1. composition du sirop de dragéification : (76% Matières sèches - 90°C)

| | *Ingrédients en poids* | *Composition en matières sèches* |
|---|---|---|
| Maltitol MALTISORB^{®}P200 | 25.000 kg | 94.0% |
| Dioxyde de titane | 0.266 kg | 1.0% |
| Gomme Arabique (40% MS) | 3.320 kg | 5.0% |
| Eau | 6.400 kg | |
| | | 100.00 |

### 2. Paramètres et séquence d'enrobage (50 Kg de chewing gums)

Phase 1 = dépoussiérage et préchauffage

| Phase | | 2 | 3 | 4 | 5 | 6 | 7 | 8 | 9 | 10 | 11 |
|---|---|---|---|---|---|---|---|---|---|---|---|
| | Nombre de cycles | 4 | 4 | 4 | 2 | 6 | 2 | 7 | 3 | 2 | 1 |
| | Quantité de sirop (kg) | 0,5 | 0.6 | 0.7 | 0.7 | 0.8 | 0.6 | 0.4 | 0.2 | 0.1 | wax |
| | 1^{ère} pause (min) | 0.5 | 1.0 | 1.5 | 1.0 | 2.0 | 1.0 | 2.5 | 5.0 | 5.0 | |
| | SweetPearl^{®} P35 (kg) | 0.4 | 0 | 0 | 0 | 0 | 0 | 0 | 0 | 0 | |
| | Arôme (g) | 0 | 0 | 0 | 88 | 0 | 88 | 0 | 0 | 0 | |
| | 2^{ème} pause (min) | 1.0 | 0 | 0 | 1.0 | 0 | 1.0 | 0 | 0 | 0 | 5 |
| | Séchage (min) | 2 | 3.5 | 4 | 3.5 | 3.0 | 2.5 | 2.0 | 0 | 0 | 10 |
| | Air (débit 15 m³/min) | direct | direct | direct | direct | direct | direct | direct | direct | direct | direct |
| | Temperature air (°C) | 25 | 28 | 30 | 32 | 35 | 30 | 28 | 25 | 25 | 25 |
| | Vitesse turbine (rpm) | 10 | 10 | 11 | 11 | 11 | 11 | 11 | 11 | 11 | 11 |

De l'arôme menthe a été ajouté à la surface des noyaux au cours des phases 5 et 7. Le procédé est réalisé de façon à obtenir un taux de grossissage est de 25%.

### Exemple 2

Cet exemple porte sur l'évaluation des qualités organoleptiques des chewing-gums obtenus selon l'exemple 1 par un panel de 15 personnes entraînées à la dégustation et à la notation des chewing-gums.

Le chewing-gum selon l'invention contient 9% de maltitol SweetPearl^{®} P700 et le chewing-gum témoin n'en contient pas du tout.

Le panel a été invité à noter de 0 à 5 la croustillance des chewing-gums toutes les 20 secondes pendant 3 minutes. 5 étant le maximum de croustillance et 0 correspondant à une absence total de croustillance (un fois le coating terminé quand il ne reste que la gomme de base).

Les produits sont présentés dans un ordre aléatoire, et sont codés avec un numéro à 3 chiffres afin que les panélistes ne soient pas influencés ni par la connaissance des produits ni par leurs codes. Les dégustations sont faites dans un laboratoire d'analyse sensorielle.

A T+0, le chewing-gum est introduit dans la cavité buccale et en même temps le chronomètre est déclenché. Puis la mastication débute. La croustillance a été notée toutes les 20 secondes jusqu'à ce que toute la croustillance disparaisse et qu'il ne reste plus que la gomme de base dans la bouche.

Le croustillant correspond à un niveau élevé de fracturabilité du produit. La fracturabilité est une propriété mécanique de texture liée à la cohésion et à la dureté ainsi qu'à la force nécessaire pour qu'un produit s'effrite ou se brise. Elle s'évalue en imprimant une force brusque à un produit placé entre les dents. (Norme NF EN ISO 5492- nov 2009) Le bruit qu'effectue le chewing-gum à la mastication rend compte du croustillant du produit.

Le traitement des données a été effectué par un traitement statistique (ANOVA et tests de comparaison de moyennes sont effectués sur les moyennes obtenues à chaque intervalle de temps).

Il ressort que :
- la croustillance des deux chewing-gums est identique et maximale à T=0 ; et au-delà de 120 secondes est minimale.
- Une différence significative est observée entre 40 et 60 secondes. Les chewing-gums selon l'invention sont encore notés comme étant très croustillants (entre 4 et 3), alors que les chewing-gums témoins ont déjà perdus plus de la moitié de leur croustillance à 40 secondes (note moyenne de 1,5 attribuée).
- A 80 secondes, les chewing-gums témoins ont perdu toute leur croustillance (note attribuée nulle), alors que les chewing-gums selon l'invention sont encore notés comme ayant une croustillance de 1,5, voire 2.
- Il faudra attendre 120 secondes pour que les chewing-gums selon l'invention aient perdu toute leur croustillance.

Cet exemple montre qu'il y a bien un effet long lasting de la croustillance avec les chewing-gums obtenus selon la présente invention.

### Exemple 3

Cet exemple porte sur la fabrication d'une composition de chewing-gum comprenant une gomme de base, un arôme et un polyol sous la forme d'une poudre de granulométrie variable, et un enrobage sans sucre.

Le témoin a été réalisé avec une composition de chewing-gum ne contenant pas de particules de polyol de grosse granulométrie.

Trois granulométries de poudre de polyol ont été testées : 450 µm, 700 µm et 800µm.

Tous les pourcentages exprimés le sont par rapport au poids total de la composition de chewing-gum mise en oeuvre.

Les centres ainsi obtenus ont ensuite été dragéifiés.

### 1. Préparation des compositions de chewing-gums

### Ingrédients mis en oeuvre dans les compositions de chewing-gum

| **Ingrédients** | **Témoin (%)** | **Essai 1 450µm (%)** | **Essai 2 700 µm (%)** | **Essai 3 800 µm (%)** |
|---|---|---|---|---|
| Gomme de base GB Optima (CAFOSA) | 30 | 30 | 30 | 30 |
| SweetPearl^{®} P35 | 60,60 | 50,50 | 50,50 | 50,50 |
| Poudre de maltitol | - | 9 | 9 | 9 |
| Sirop de maltitol Lycasin^{®} 85/55 | 7 | 7,50 | 7,50 | 7,50 |
| Glycérine | 0,50 | 0,35 | 0,35 | 0,35 |
| Arôme menthe/vanille liquide | 1,50 | 1,50 | 1,50 | 1,50 |
| Arôme menthe/vanille poudre | 0,20 | 1 | 1 | 1 |
| Edulcorant intense (Aspartame) | 0,20 | 0,15 | 0,15 | 0,15 |
| TOTAL | 100 | 100 | 100 | 100 |
| Le SweetPearl^{®} P35 est une poudre de maltitol cristalline, commercialisée par la Demanderesse de granulométrie très fine, d'environ 35µm. | | | | |

Le mode opératoire de préparation des compositions de chewing gum témoin et selon l'invention est identique à celui décrit dans l'exemple 1.

De même, une fois les centres obtenus, le même mode opératoire pour la dragéification que celui décrit dans l'exemple 1 a été appliqué.

Le procédé de dragéification a été réalisé de façon à obtenir au final un taux de grossissage de 25% sur les 4 chewing gums.

### 2. Evaluation des qualités organoleptiques des 4 chewing gums

Les chewing gums testés contiennent respectivement 9% de maltitol de granulométrie 450 µm, 700 µm et 800 µm.

Le chewing-gum témoin n'en contient pas du tout.

Le panel de 15 personnes entrainées à la dégustation et à la notation des chewing-gums a été invité à noter de 0 à 5 la croustillance des chewing-gums toutes les 20 secondes pendant 3 minutes, 5 étant le maximum de croustillance et 0 correspondant à une absence totale de croustillance (une fois le coating consommé quand il ne reste plus que la gomme de base pour le témoin notamment).

Les produits sont présentés dans un ordre aléatoire, et sont codés avec un numéro à 3 chiffres afin que les panélistes ne soient pas influencés ni par la connaissance des produits ni par leurs codes. Les dégustations sont faites dans un laboratoire d'analyse sensorielle.

A T+0, le chewing-gum est introduit dans la cavité buccale et en même temps le chronomètre est déclenché. Puis la mastication débute. La croustillance a été notée toutes les 20 secondes jusqu'à ce que toute la croustillance disparaisse et qu'il ne reste plus que la gomme de base dans la bouche.

Le croustillant correspond à un niveau élevé de fracturabilité du produit. La fracturabilité est une propriété mécanique de texture liée à la cohésion et à la dureté ainsi qu'à la force nécessaire pour qu'un produit s'effrite ou se brise. Elle s'évalue en imprimant une force brusque à un produit placé entre les dents. (Norme NF EN ISO 5492- nov 2009) Le bruit qu'effectue le chewing-gum à la mastication rend compte du croustillant du produit.

Le traitement des données a été effectué par un traitement statistique (ANOVA et tests de comparaison de moyennes sont effectués sur les moyennes obtenues à chaque intervalle de temps).

Il ressort que :
- la croustillance des quatre chewing-gums est identique et maximale à T=0 ; et au-delà de 120 secondes est minimale.
- Une différence significative est observée entre 40 et 60 secondes. Les chewing-gums testés sont encore notés comme étant très croustillants (entre 4 et 3), alors que les chewing-gums témoins ont déjà perdus plus de la moitié de leur croustillance à 40 secondes (note moyenne de 1,5 attribuée).
- Au niveau des chewing-gums testés, entre 40 et 60 secondes, les chewing-gums de l'essai 2 sont notés 4 alors que ceux de l'essai 1 et 3 sont notés respectivement 2,5 et 3. Ils ont déjà perdu de leur croustillance.
- A 80 secondes, les chewing-gums témoins ont perdu toute leur croustillance (note attribuée nulle), alors que les chewing-gums testés sont encore notés comme ayant une croustillance de 1 et 1,5 respectivement pour les essais 1 et 3 et de 2 pour l'essai 2.
- Il faudra attendre 120 secondes pour que les chewing-gums testés aient perdu toute leur croustillance.

Cet exemple montre qu'il y a bien un effet long lasting de la croustillance avec les chewing-gums testés d'une part mais surtout que les chewing-gums réalisés avec une poudre de maltitol présentant une granulométrie de 700 µm sont ceux qui possèdent la croustillance la plus grande et un effet long lasting de cette dernière le plus long.

Il y a donc bien un impact direct de la granulométrie de la poudre de polyol utilisée sur la croustillance.

### Exemple 4

Cet exemple porte sur la fabrication d'une composition de chewing-gum comprenant une gomme de base, un arôme et un polyol sous la forme d'une poudre de granulométrie variable : 500 µm et 700 µm et en testant deux polyols différents, et un enrobage sans sucre.

Deux poudres de polyol de granulométrie de 500 µm et 700 µm ont ainsi été testées pour deux polyols différents : maltitol et isomalt.

Tous les pourcentages exprimés le sont par rapport au poids total de la composition de chewing-gum mise en oeuvre.

Les centres ainsi obtenus ont ensuite été dragéifiés.

### 1. Préparation des compositions de chewing-gums

### Ingrédients mis en oeuvre dans les compositions de chewing-gum

| **Ingrédients** | **Essai 1 (%) maltitol 500µm** | **Essai 2 (%) maltitol 700µm** | **Essai 3 (%) Isomalt 500 µm** | **Essai 4 (%) Isomalt 700 µm** |
|---|---|---|---|---|
| Gomme de base GB Optima (CAFOSA) | 30 | 30 | 30 | 30 |
| SweetPearl^{®} P35 | 50,50 | 50,50 | 50,50 | 50,50 |
| Poudre de polyol | 9 | 9 | 9 | 9 |
| Sirop de maltitol Lycasin^{®} 85/55 | 7,50 | 7,50 | 7,50 | 7,50 |
| Glycérine | 0,35 | 0,35 | 0,35 | 0,35 |
| Arôme menthe/vanille liquide | 1,50 | 1,50 | 1,50 | 1,50 |
| Arôme menthe/vanille poudre | 1 | 1 | 1 | 1 |
| Edulcorant intense (Aspartame) | 0,15 | 0,15 | 0,15 | 0,15 |
| TOTAL | 100 | 100 | 100 | 100 |
| Le SweetPearl^{®} P35 est une poudre de maltitol cristalline, commercialisée par la Demanderesse de granulométrie très fine, d'environ 35µm. | | | | |

Le mode opératoire de préparation des compositions de chewing gum est identique à celui décrit dans l'exemple 1.

De même, une fois les centres obtenus, le même mode opératoire pour la dragéification que celui décrit dans l'exemple 1 a été appliqué.

Le procédé de dragéification a été réalisé de façon à obtenir au final un taux de grossissage de 25% sur les 4 chewing gums.

### 2. Evaluation des qualités organoleptiques des 4 chewing gums

Les chewing gums contiennent respectivement 9% de maltitol de granulométrie 500 µm et 700 µm et d'isomalt de granulométrie 500 et 700 µm.

Le même test d'évaluation des qualités organoleptiques que celui décrit dans les exemples 2 et 3 a été utilisé, sur un panel de 15 personnes entrainées à la dégustation et à la notation des chewing-gums.

Il ressort que :
- la croustillance des quatre chewing-gums est identique et maximale à T=0 ; et au-delà de 120 secondes est minimale.
- Une différence est déjà observée entre 40 et 60 secondes. Les chewing-gums de l'essai 2 sont encore notés comme étant très croustillants (notés 4), alors que les chewing-gums des essais 1, 3 et 4 ont déjà perdu un peu de croustillance. Ils sont notés respectivement 3, 2,5 et 2,5.
- A 80 secondes, la même différence de croustillance est à noter. L'essai 2 est toujours perçu comme étant le plus croustillant (note 2,5 voire 3) alors que les trois autres essais sont notés respectivement 1,5, 1,5 et 2.
- Il faudra attendre 120 secondes pour que les chewing-gums aient perdu toute leur croustillance.

Cet exemple montre que non seulement la nature du polyol est importante, mais qu'également la granulométrie a un impact sur l'effet croustillant des produits.

Pendant les 60 premières secondes, ce sont les chewing-gums réalisés avec du maltitol qui sont plus croustillants que ceux réalisés avec de l'isomalt, avec en plus une supériorité des chewing-gums réalisés avec du maltitol 700 µm par rapport aux chewing-gums réalisés avec du maltitol 500 µm.

Lorsque la mâche a atteint 80 secondes, il semblerait que ce soit plus la taille des particules de la poudre de polyol qui influence la sensation de croustillance perçue. En effet, les deux essais 2 et 4 réalisés avec des poudres de polyols de 700 µm de diamètre sont notés comme étant les plus croustillants, avec en plus encore une supériorité pour les chewing-gums contenant du maltitol 700 µm par rapport à ceux contenant de l'isomalt 700µm.

Il y a donc bien un impact direct de la granulométrie de la poudre de polyol utilisée, ainsi que de la nature du polyol utilisé sur la croustillance finale des chewing-gums obtenus. Les chewing-gums les plus croustillants le sont avec une poudre de maltitol de granulométrie 700 µm.

### Exemple 5

Cet exemple porte sur l'étude de la stabilité des compositions de chewing-gums dans le temps.

Les compositions de chewing-gums testées sont celles réalisées dans l'exemple 4 précédent.

Elles ont été comparées avec une composition témoin de chewing-gum ne contenant pas de particules de polyol de grosse granulométrie.

Tous les chewing-gums ont été laissés à l'air libre dans un placard à température normale d'environ 20°C. Des échantillons ont été prélevés à T = 0, puis tous les mois pendant 6 mois.

Le panel de 15 personnes entrainées à la dégustation et à la notation des chewing-gums a été invité à noter de 0 à 5 la croustillance des chewing-gums pendant les 10 premières secondes de mastication, 5 étant le maximum de croustillance et 0 correspondant à une absence totale de croustillance. Les produits sont présentés dans un ordre aléatoire, et sont codés avec un numéro à 3 chiffres afin que les panélistes ne soient pas influencés ni par la connaissance des produits ni par leurs codes. Les dégustations sont faites dans un laboratoire d'analyse sensorielle.

A T+0, le chewing-gum est introduit dans la cavité buccale et en même temps le chronomètre est déclenché. Puis la mastication débute. La croustillance a été notée au bout de 10 secondes de mastication. Ce test permet de voir si dès l'introduction en bouche et le démarrage de la mastication, il y a déjà eu une perte de l'effet croustillant.

Le croustillant correspond à un niveau élevé de fracturabilité du produit. La fracturabilité est une propriété mécanique de texture liée à la cohésion et à la dureté ainsi qu'à la force nécessaire pour qu'un produit s'effrite ou se brise. Elle s'évalue en imprimant une force brusque à un produit placé entre les dents. (Norme NF EN ISO 5492- nov 2009) Le bruit qu'effectue le chewing-gum à la mastication rend compte du croustillant du produit.

Le traitement des données a été effectué par un traitement statistique (ANOVA et tests de comparaison de moyennes sont effectués sur les moyennes obtenues à chaque intervalle de temps).

Il ressort que :
- la croustillance des quatre chewing-gums testés ainsi que celle du chewing-gum témoin est identique et maximale à T=0 jour. Au bout de 10 secondes de mastication, le témoin a déjà perdu de sa croustillance (note de 4) alors que les quatre autres chewing-gums sont encore notés 4,5 voire 5.
- Au bout de un mois et deux mois, la croustillance des chewing-gums témoin est jugée comme étant de 3,5 alors que celle des quatre essais est encore notée comme étant à 4,5 voire 5.
- Au bout de 3 mois, les chewing-gums témoins sont notés 3. Les deux essais contenant de l'isomalt sont notés comme étant à 4, et les deux essais contenant du maltitol sont notés 4,5.
- A 4 mois, aucune évolution par rapport à la situation à 3 mois sur la croustillance n'a été remarquée.
- A 5 mois et six mois, le témoin a perdu de sa croustillance puisqu'il est noté comme étant à 2. Les deux essais contenant de l'isomalt comme ceux contenant du maltitol n'ont pas perdu de leur effet croustillant, et possèdent toujours des niveaux de croustillance plus que satisfaisants, puisque de 4 et 4,5 respectivement, et ce quel quelle que soit la granulométrie de la poudre utilisée.

Ainsi, les compositions de chewing-gum mises en œuvre dans le procédé de l'invention sont plus stables au cours du temps qu'une composition témoin ne contenant pas de particules d'une certaine granulométrie.

## Revendications

1. Procédé de fabrication d'un chewing-gum dragéifié acariogène **caractérisé en ce qu'**il comporte les étapes suivantes :
- fabrication d'une composition de chewing-gum en mélangeant au moins une gomme de base, un arôme et des particules d'hydrate de carbone acariogène de granulométrie moyenne de 650 à 750 µm,
- extrusion du mélange précédent,
- laminage,
- découpe,
- refroidissement, et
- dragéification des centres ainsi obtenus, l'hydrate de carbone étant le maltitol.

2. Procédé selon la revendication précédente **caractérisé en ce que** l'étape de dragéification comprend un ou plusieurs cycles comprenant chacun une phase d'application, généralement par pulvérisation, d'un sirop de dragéification (contenant un ou plusieurs polyols, mais aussi parfois des liants comme la gomme arabique ou la gélatine, des colorants comme le TiO₂, des édulcorants intenses...) sur les noyaux, une phase rotative de répartition dudit sirop sur les noyaux appelée également temps de pause, et une phase de séchage de chaque nouvelle couche de sirop réalisée par soufflage d'air chaud et sec.

3. Procédé selon la revendication 1, **caractérisé en ce que** la composition de chewing gum comporte entre 5 et 20%, de préférence entre 8 et 13% de particules d'hydrate de carbone acariogène d'une granulométrie moyenne de 650µm à 750µm.

4. Procédé selon la revendication 1, **caractérisé en ce que** l'étape de dragéification est réalisée jusqu'à obtenir des taux de grossissage compris entre 25% et 40%, et de préférence entre 25% et 31%, et de préférence encore entre 25% et 28%.

## Patentansprüche

1. Verfahren zur Herstellung eines akariogenen dragierten Kaugummis, **dadurch gekennzeichnet, dass** es die folgenden Schritte umfasst:
- Herstellung einer Kaugummizusammensetzung durch Mischen mindestens eines Basisgummis, eines Aromas und akariogener Kohlenhydratteilchen mit einer mittleren Partikelgröße von 650 bis 750 µm,
- Extrusion der vorhergehenden Mischung,
- Walzen,
- Schneiden,
- Kühlung und
- Dragieren der so erhaltenen Zentren, wobei das Kohlenhydrat Maltit ist..

2. Verfahren nach dem vorhergehenden Anspruch, **dadurch gekennzeichnet, dass** der Schritt des Dragierens einen oder mehrere Zyklen umfasst, die jeweils eine Auftragungsphase, im Allgemeinen durch Sprühen, eines Beschichtungssirups (der ein oder mehrere Polyole, manchmal aber auch Bindemittel wie Gummi arabicum oder Gelatine, Färbemittel, wie TiO₂, intensive Süßstoffe ... enthält) auf die Kerne, eine Rotationsphase der Verteilung des Sirups auf den Kernen, auch Verweilzeit genannt, und eine Trocknungsphase jeder neuen Sirupschicht durch Einblasen von heißer und trockener Luft umfassen.

3. Verfahren nach Anspruch 1, **dadurch gekennzeichnet, dass** die Kaugummizusammensetzung zwischen 5 und 20%, bevorzugt zwischen 8 und 13%, akariogene Kohlenhydratteilchen mit einer mittleren Partikelgröße von 650 µm bis 750 µm enthält.

4. Verfahren nach Anspruch 1, **dadurch gekennzeichnet, dass** der Schritt des Dragierens durchgeführt wird, bis Vergrößerungsraten zwischen 25% und 40% und bevorzugt zwischen 25% und 31%, und weiter bevorzugt zwischen 25% und 28% erhalten werden.

## Claims

1. Method for manufacturing a non-cariogenic sugar-coated chewing gum, **characterised in that** it comprises the following steps:
- manufacturing a chewing-gum composition by mixing at least one base gum, a flavouring and particles of non-cariogenic carbohydrate with a mean granulometry of 650 µm to 750 µm,
- extruding the above mixture,
- rolling,
- cutting,
- cooling, and
- sugar-coating the centres thus obtained, the carbohydrate being maltitol.

2. Method according to the preceding claim, **characterised in that** the sugar-coating step comprises one or more cycles each comprising a phase of applying, generally by spraying, a sugar-coating syrup (containing one or more polyols, but also sometimes binders such as gum arabic or gelatine, dyes such as TiO₂, intense sweeteners, etc.) on the cores, a rotary phase of distribution of said syrup on the cores, also referred to as a pause time, and a phase of drying each new layer of syrup carried out by blowing hot dry air.

3. Method according to claim 1, **characterised in that** the chewing-gum composition comprises between 5% and 20%, preferably between 8% and 13% particles of non-cariogenic carbohydrate with a mean granulometry of 650 µm to 750 µm.

4. Method according to claim 1, **characterised in that** the sugar-coating step is carried out until degrees of enlargement of between 25% and 40%, preferably between 25% and 31%, and preferably still between 25% and 28% are obtained.
